Europäisches Patentamt

European Patent Office

Office européen des brevets

(11) Publication number: **0 358 366**
A2

(12) **EUROPEAN PATENT APPLICATION**

(21) Application number: **89308440.0**

(22) Date of filing: **21.08.89**

(51) Int. Cl.⁵: **G01D 5/24**

(30) Priority: **20.08.88 JP 206654/88**

(43) Date of publication of application:
**14.03.90 Bulletin 90/11**

(84) Designated Contracting States:
**DE FR GB**

(71) Applicant: **ATSUGI MOTOR PARTS CO. LTD.**
**1370, Onna**
**Atsugi-shi Kanagawa-ken(JP)**

(72) Inventor: **Kida, Yoshinobu**
**c/o Atsugi Motor Parts Company, Limited**
**1370, Onna**
**Atsugi-shi Kanagawa-ken(JP)**
Inventor: **Kodama, Masami**
**c/o Atsugi Motor Parts Company, Limited**
**1370, Onna**
**Atsugi-shi Kanagawa-ken(JP)**
Inventor: **Suwa, Toshio**
**c/o Atsugi Motor Parts Company, Limited**
**1370, Onna**
**Atsugi-shi Kanagawa-ken(JP)**

(74) Representative: **Blanco White, Henry Nicholas**
**et al**
**ABEL & IMRAY Northumberland House**
**303-306 High Holborn**
**London WC1V 7LH(GB)**

(54) **Electrostatic capacity-type displacement sensor.**

㋙ A dielectric capacity-type displacement sensor is provided for measuring relative displacement between a cylindrical member and a rod member. The dielectric capacity displacement sensor includes a conductive cylinder arranged coaxially to the cylindrical member and a rod member for movement within the cylindrical member. The cylindrical member is filled with gas such as air or an $N_2$ gas as a dielectric medium independent of variations in temperature and has an inner surface facing the outer periphery of the rod member to provide an electrical capacitance. The gas capacity of the working chamber of the cylinder is varied according to displacement of the rod member into the cylindrical member. Thus, by measuring the variation in capacity, the displacement of the rod member relative to the cylindrical member can be determined precisely regardless of variations in the temperature of the gas in the cylinder or that of the outside air. Thus, the introduction of outside air into the cylinder will not hinder the functioning of the sensor.

FIG.3

# ELECTROSTATIC CAPACITY-TYPE DISPLACEMENT SENSOR

The present invention relates generally to an electrostatic capacity-type displacement sensor for monitoring the stroke displacement of a movable member. More particularly, the invention relates to an electrostatic capacity-type displacement sensor for measuring the stroke displacement of a piston in a hydraulic cylinder of a hydraulic power steering unit suitable for a fork lift truck for example, required for correcting relative shift between the angular displacement of a steering wheel and the angle of a steered wheel. Additionally, the invention relates to an electrostatic capacity-type displacement sensor for detecting the vibration (or amplitude) of a shock absorber of a vehicle.

Electrostatic capacity-type displacement sensors have been widely used for monitoring the displacement of movable members. For example, Japanese Patent First Publication No. 60-261779 examplifies an electrostatic capacity-type displacement sensor used for example in a power steering unit for a fork lift truck. The disclosed system includes a power steering unit, a hydraulic cylinder, and an electrostatic capacity-type displacement sensor. The power steering unit is connected to a piston in a hydraulic cylinder which is operable to steer wheels via a hydraulic system. Repeated movement of the piston rod, that is, repeated steering, tends to cause the hydraulic system to leak working fluid. Leakage of the working fluid takes place especially in the hydraulic cylinder or the power steering unit. The hydraulic cylinder includes a piston, to which a piston rod is connected, defining a first chamber and a second chamber in the cylinder. Controlling the difference in fluid pressure between the first and the second chambers causes the piston to be displaced to steer the wheels. Due to wearing of the piston, leakage of fluid tends to occur between the first and second chambers providing insufficient fluid pressure to move the piston. Additionally, a power steering unit has valves which are subject to wear similar to the hydraulic cylinder, causing the fluid pressure in the hydraulic system to be reduced. This results in an angular shift between the steering wheel and the wheel or wheels being steered.

Consequently, in the conventional system, the stroke of the piston rod is measured by means of a displacement sensor and the angle of the steered wheel is detected by means of an angle detecting sensor, these values are compared to correct the angular shift when the compared value exceeds a reference value. This correction also serves to return working fluid, which has leaked between the cylinder chambers, to a tank from where it is introduced to the appropriate chamber of the hydraulic cylinder such that alignment between the position of the steering wheel and the position of a steered wheel is restored.

Further, electrostatic capacity-type displacement sensors, for detecting variations in the vertical vibration of a vehicle, are well known in the art. A displacement sensor is adapted for sensing the stroke amplitude of a shock absorber disposed between a vehicle body and a wheel. Based on this detected amplitude, the damping force of the shock absorber is controlled to prevent vertical vibrations of the wheels, due to uneven road conditions, from being transmitted to the vehicle body.

Such conventional electrostatic capacity-type displacement sensors make use of fluids such as oil as a dielectric and have some disadvantages. For example, a sealing member is provided to enclose the oil in the cylinder hermetically so as to allow the piston rod to slide therein, however the sealing effect is reduced by wear to the slide portion. Moreover, the sealing member can not prevent air from entering into the cylinder as a result of deterioration due to ozone, outside air temperature, and dust. Therefore, air is mixed with the oil in the cylinder tending to cause the dielectric constant to vary, thereby inducing error in measuring.

The dielectric constant of oil has a negative factor dependent upon variation in temperature. The functioning of the displacement sensor is influenced by the mounting position thereof. For example, error in measurement may occur due to variations in temperature at a position adjacent to an exhaust pipe. Thus, in conventional displacement sensors, a resistant having a positive factor is provided in the circuit of the displacement sensor to correct for the negative factor of the oil. This notably increases the manufacturing cost of the sensor.

It is accordingly an object of the present invention to provide a dielectric capacity-type displacement sensor for monitoring the displacement stroke of a movable member precisely regardless of variations in the temperature of the sensor or the outside air and irrespective of outside air which may be introduced into the sensor.

According to one aspect of the present invention, there is provided an electrostatic capacity-type displacement sensor which comprises a first hollow member forming a first electrode, gas, having a given dielectric constant, provided in the first hollow member, a second rod member forming a second electrode, insulated from the first hollow member, the second electrode being slidable in the first hollow member and defining a clearance therebetween for providing an electrostatic capacitance, in cooperation with the first electrode and the gas, variable according to the relative displacement between the second rod member and the first hollow member, and a means for determining said electrostatic capacitance to provide a signal indicative of the relative displacement between the first hollow member and the second rod member.

According to another aspect of the invention, there is provided an electrostatic capacity-type displacement sensor which comprises a cylinder forming a first electrode, gas, having a given dielectric constant, provided hermetically in the cylinder, a rod member insulated from the cylinder to form a second electrode, the rod member being slidably disposed within the cylinder and defining an annular clearance therebetween for providing an electrostatic capacitance, in cooperation with the first electrode and the gas, variable depending upon the position of the rod member relative to the cylinder, and a means for determining the electrostatic capacitance to provide a signal indicative of the relative positions of the rod member and the cylinder.

In the preferred mode, the gas is air or an $N_2$ gas. The gas is enclosed hermetically in the cylinder. The rod member is slidable in the cylinder so as to vary the magnitude of overlap therewith according to the relative position of the cylinder and the rod member to vary the electrostatic capacitance. The rod member includes an insulating piston and a piston rod. The insulating piston slidably supports the piston rod so as to coaxially space it from the inner surface of the cylinder to form an annular clearance. Further, the insulating piston defines a first chamber and a second chamber within the cylinder, each chamber filled with the gas under a predetermined pressure, the pressure in each chamber varying according to the movement of the piston rod.

The present invention will be understood from the detailed description given hereinbelow and from the accompanying drawings of the preferred embodiment of the invention which are not intended to limit the invention to the specific embodiment but are included for explanation and understanding only.

Fig. 1 is a schematic view which shows a typical dielectrostatic capacity-type displacement sensor.

Fig. 2 is a front view which shows a dielectrostatic capacity-type displacement sensor according to the present invention.

Fig. 3 is a sectional view taken along the line III-III indicated in Fig. 2.

Fig. 4 is a block diagram which shows a displacement detecting circuit for a dielectrostatic capacity-type displacement sensor according to the invention.

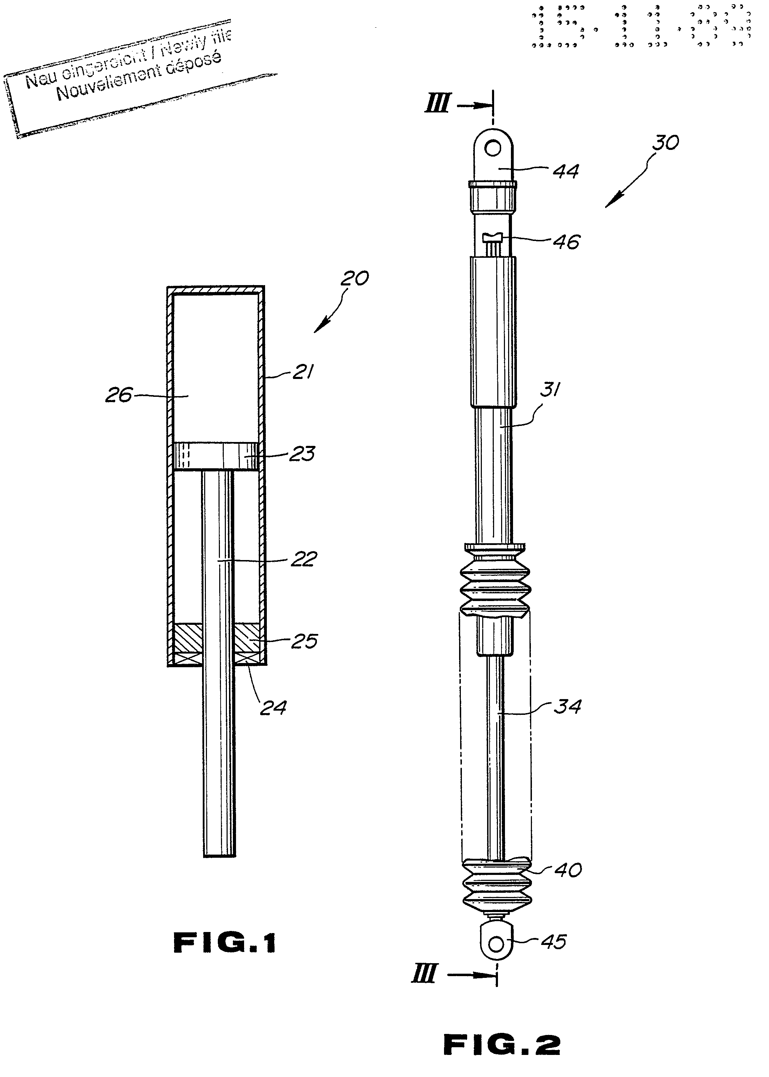

Referring now to the drawings, particularly to Fig. 1, the principles of electrostatic capacity-type displacement sensors will be described hereinbelow in order to facilitate a better understanding of the present invention. An electrostatic capacity-type displacement sensor 20 generally comprises a cylinder 21, a piston rod 22, a piston 23, an insulator 24, and a rod guide 25. The piston 23 is made of an insulating material and defines cavities 26 and 27 within the cylinder 21 according to its vertical displacement. The piston, drawn by the piston rod maintains contact with the inner surface of the cylinder 21. The insulator 24 and the rod guide 25 seal the opening of the cylinder 21 and have holes aligned with each other into which the piston rod 22 is hermetically inserted.

The cylinder 21 is filled with a gas such as air or an $N_2$ gas having a given dielectric constant so as to be unaffected by atmospheric influence. With this construction, assuming that the cylinder 21 and the piston rod 22 are electrodes, an electrical capacitance is provided therebetween. It will be noted that by measuring variation in the capacitance, variation in the volume of the cavity of 27 due to displacement of the piston 22 can be determined.

An electrostatic capacity-type displacement sensor according to the present invention may not only be utilized as a displacement gauge, but as a gauge having the characterisics of a displacement gauge and a gas spring or so forth the latter function possible through the addition of spring properties. For example, if the sensor is used for the former, the cavity has only to be filled with gas under normal air pressure, while if the sensor is used for the latter, the cavity is filled with gas under relatively high pressure.

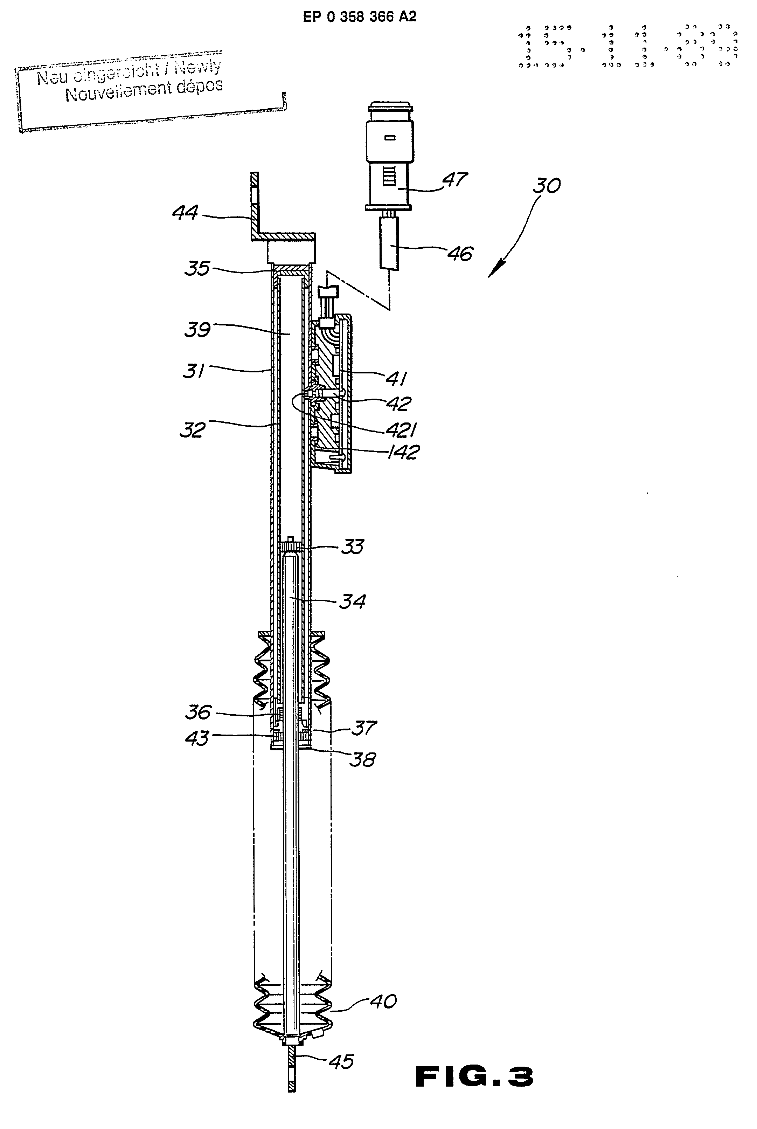

Referring to Figs. 2 and 3, an electrostatic capacity-type displacement sensor according to the present invention is shown. This sensor 30 includes a cylindrical casing 31, a conductive cylinder 32 supported within the cylinder casing, an insulating piston 33 slidable in the cylinder, and a conductive piston rod 34. The cylinder 32 is supported by an insulating seal member 35 and a rod guide 36 so as to be coaxially disposed within the cylinder casing and be spaced from the inner surface thereof by a predetermined distance. The piston rod 34 is supported by the rod guide 36 so as to be slidable within the cylinder 32 while being insulated therefrom. The rod guide also maintains the correct spacing between the piston rod and the cylinder 32. An end of the cylindrical casing 31 is hermetically closed by the seal member 35, while the other end allowing access of the piston rod 34 is hermetically sealed by a gas seal 37 and a dust seal 38. The gas seal 37 and the dust seal 38 have openings allowing the piston rod 34 to slide hermetically. The cylindrical casing 31 and the cylinder 32 are filled with gas 39 having a given dielectric constant. Disposed around the outer periphery of the end section of the cylindrical casing 31 is a dust boot 40. The other end of the dust boot 40 is fixed on the end of the piston rod 34 so as to cover the piston rod. The dust boot 40 is extendable according to the movement of the piston rod 34 to guard it against damage. The displacement sensor 30 further includes a displacement detecting circuit 41 on the outer surface of the cylindrical casing 31. This displacement detecting circuit 41 includes terminals 42 and 142 for sensing variations in the dielectric constant of the gas. The terminal 42 has an electrode 421 which is inserted into a bore formed in the cylindrical casing 31 so as to be insulated therefrom and elastically contacts with a point defined on the outer surface of the cylinder 32. The terminal 142 maintains contact with the cylindrical casing 31. The cylindrical casing 31 is conductively connected to the piston rod 34 via a conductive brush 43 which is disposed between the gas seal 37 and the dust seal 38. It will be appreciated that an electrical capacitor is formed wherein the cylindrical casing 31 and the piston rod 34 comprise one electrode and the cylinder 32 is the other.

The electrostatic capacity-type displacement sensor 30 is mounted on a shock absorber (not shown) by means of hinges 44 and 45. The displacement detecting circuit 41 is electrically connected to a controller 47 through a harness 46 and a connector 47.

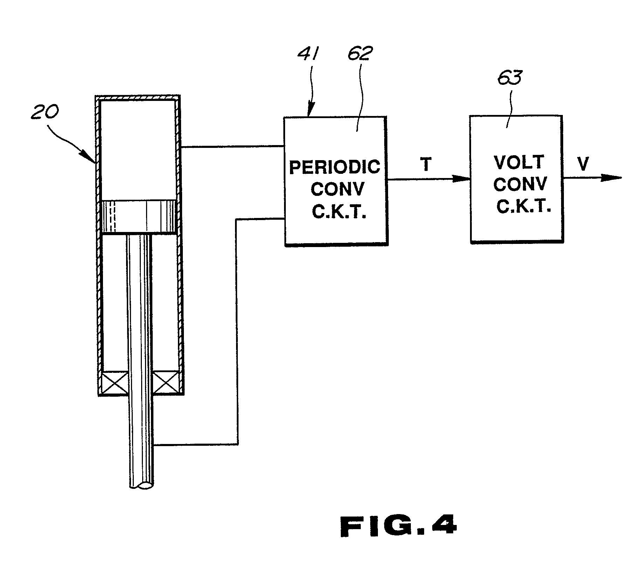

In operation, transmission shock absorber (not shown) vibrations to the electrostatic capacity-type displacement sensor 30 causes the piston rod 34 to slide repeatedly according to the amplitude of the vibrations. This movement of the piston rod 34 causes the volume of space filled with the gas 39 which is defined between the cylinder 32 and the piston rod 34, to change. It will be noted that the volume defined between the electrodes of the capacitor varies successively according to the vibration. Thus, downward movement of the piston rod 34 reduces the capacity, while the upward movement of the piston rod 34 increases the capacity. This variation in capacity is detected by the terminals 42 and 142 of the displacement detecting circuit 41. The detected variation is then converted to a predetermined periodic signal having a level proportional to the capacity by means of a periodic converting circuit 62, as shown in Fig. 4, provided in the displacement detecting circuit 41.

Additionally, the periodic signal proportional to capacity variation may be converted to a d.c. voltage signal having a level variable proportionally to the capacity variation by a voltage converting circuit 63. These signals are then supplied to the controller (not shown) from the converting circuit 41 via the harness 46 and the connector 47.

Assuming that the inner diameter of the cylinder 32 is "a", the outer diameter of the piston rod 34 is "b", the length of a section where the piston rod is inserted into the cylinder 32 is "L", and the dielectric constant of the gas 39 is "$\epsilon$", capacity "C" is expressed by the following formula.

$$C = ( 2\pi\epsilon L ) / \log (a/b) \qquad (1)$$

The variation of the capacity C must be in the range of stroke of which the piston rod 34 is capable. The reduction of volume in the cylinder 32 caused by insertion of the piston rod 34 into the cylinder 32 is translated into pressure buildup of the gas 39.

In the above embodiments, even if water, included in air, enters into the cylinder due to deterioration of a seal member, the variation in capacitance is small because the ratio of water to air under most atmospheric conditions is extremely low and thus would not impinge upon the functioning of a power steering unit in a fork lift truck for example. However, extremely accurate measurement of displacement requires the pre-injection of dry air or an $N_2$ gas.

As described above, in the displacement sensor according to the present invention, entrance of air into the cylindrical casing 31 and the cylinder 32 due to the deterioration of the seal does not significantly impinge upon the variation of the capacity because the medium within the cylinder is a gas similar to the outside air. Thus, control for adjusting the damping force of a shock absorber or for adjusting the angular shift in a power steering unit, as mentioned in the background, can be executed with great stability.

Additionally, the dielectric constant of the gas 39 is will not vary due to variations in temperature of the gas. It will be appreciated that since the dielectric constant has no temperature dependency, temperature correction in the displacement detecting circuit 41 by means of resistors or other means is unnecessary, thus reducing manufacturing costs.

The variation in cylinder capacity due to the displacement of the piston rod 34 within the cylinder is compensated by the pressure variation of the gas 39. Thus, the provision of a bellows for pressure compensation, conventionally installed on the outer surface of the cylindrical casing 31, is unnecessary. This results in greatly improved reliability without comprimising the quality of the displacement sensor. Additionally, fewer component parts are necessary for the displacement sensor of the invention thus reducing the man-hours needed for assembly. Since gas is used for a dielectric in the cylinder in place of liquid, the predetermined dielectric constant is changed. However, the use of a predetermined conversion constant in a processing circuit easily compensates for any variation of the dielectric constant. It will be noted that in a displacement sensor according to the present invention, electrostatic capacity is stable and the reliability of the sensor is improved without need of a provision for temperature compensation or particular measures to prevent penetration by outside air.

As described above, the dielectric capacity-type displacement sensor uses gas as a dielectric. Therefore, the sensor is always operable to measure variation in the displacement of the piston rod relative to the cylinder precisely regardless of the entry of moisture-bearing outside air into the cylinder because the water to air ratio under most atmospheric conditions is usually very low. However, in a displacement sensor requiring consideration of very small quantities of water included in air, the provision of a cylinder filled with gas under high pressure can prevent outside air from entering into the cylinder, thereby enabling the displacement sensor to provide necessary spring properties. Therefore, the dielectric capacity-type displacement sensor may also be used as a shock absorber having the additional function of a displacement sensor. This results in a reduced number of component parts and low manufacturing costs.

Although the invention has been shown and described with respect to a best mode of embodiment thereof, it should be understood by those skilled in the art that foregoing and various other changes, omissions, and additions in the form and detail thereof may be made without departing from the spirit and scope of the invention.

## Claims

1. An electrostatic capacity-type displacement sensor comprising:
a first, hollow member forming a first electrode;
gas, having a given dielectric constant, provided in said first hollow member;
a second, rod member insulated from said first hollow member forming a second electrode, said second electrode being slidable in said first hollow member and defining a clearance therebetween for providing an electrostatic capacitance, in cooperation with said first electrode and said gas, variable according to the relative displacement between said second rod member and said first hollow member; and
means for determining said electrostatic capacitance to provide a signal indicative of the relative displacement between said first hollow member and said second rod member.

2. An electrostatic capacity-type displacement sensor comprising:

a cylinder forming a first electrode;
gas, having a given dielectric constant, provided hermetically in said cylinder;
a rod member insulated from said cylinder to form a second electrode, said rod member being slidably disposed within said cylinder and defining an annular clearance therebetween for providing an electrostatic capacitance, in cooperation with said first electrode and said gas, variable depending upon the position of said rod member relative to said cylinder; and
means for determining said electrostatic capacitance to provide a signal indicative of the position of said rod member relative to said cylinder.

3. A displacement sensor as set forth in claim 1 or claim 2, wherein said rod member slides in said hollow member or cylinder so as to vary the magnitude of overlap therewith according to the relative position of said cylinder and said rod member to vary the electrostatic capacitance.

4. A displacement sensor as set forth in any one of claims 1 to 3, wherein said rod member includes an insulating piston and a piston rod, said insulating piston slidably supporting said piston rod so as to space it from the inner surface of said first hollow member by a predetermined distance to form a clearance.

5. A displacement sensor as set forth in claim 4, wherein said insulating piston defines a first chamber and a second chamber within said first hollow member, each chamber being filled with said gas under a predetermined pressure, the pressure in each chamber varying according to the movement of said piston rod.

6. A displacement sensor as set forth in any one of claims 1 to 5, wherein said hollow member or cylinder and said rod member are formed in a cylindrical configuration and have mutually different diameters so that said second rod member is coaxially arranged within said first hollow member to define an annular clearance.

7. A displacement sensor as set forth in any one of claims 1 to 6, wherein said gas is enclosed hermetically in said first hollow member by means of a sealing member.

8. A displacement sensor as set forth in any one of claims 1 to 7, wherein said gas is air.

9. A displacement sensor as set forth in any one of claims 1 to 7, wherein said gas is an $N_2$ gas.

10. A displacement sensor as set forth in any one of claims 1 to 6, wherein said cylinder is sealingly enclosed and filled with air.

**FIG.1**

**FIG.2**

44

35

39

31

32

47

46

30

41

42

421

142

33

34

36

43

37

38

40

45

# FIG.3

**FIG.4**